# EUROPEAN PATENT SPECIFICATION

(11) **EP 0 582 417 B1**
(45) Date of publication and mention of the grant of the patent: **31.03.1999**
(21) Application number: 93305885.1
(22) Date of filing: 26.07.1993
(51) Int. Cl.: H02P 7/282

(54) **Method and circuit device for DC series or compound excitation type machine**
Verfahren und Schaltungsanordnung für eine Reihenschluss- oder Kompound-erregte Gleichstrommaschine
Procédé et dispositif de circuit pour une machine à courant continu excitée en série ou en compound

(30) Priority: 05.08.1992 GB 9216576
(43) Date of publication of application: 09.02.1994
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Pratt, David Martin

(56) References cited:
- DE-A- 2 723 646
- GB-A- 1 315 851

## Description

This invention relates to a control circuit for controlling the series field winding of a DC machine.

The total efficiency of a conventional series or compound DC machine tends to be low, especially during a low speed low/low voltage mode of operation, due to the periodic drops in the excitation current being supplied to the field winding(s). These periodic drops cause the magnetic field intensity in the field winding(s) to fluctuate, and this leads to shortcomings.

Known control circuits are described in GB-A-1315851 and DE-A-2723646.

The present invention provides a control circuit for controlling the series field winding of a DC machine, the control circuit comprising a main power source for supplying the series field winding with a primary excitation current, an auxiliary power source in series with a blocking diode connected in parallel with the series field winding, for supplying the series field winding with an auxiliary excitation current, and control means for controlling the supply of auxiliary excitation current to the series field winding to maintain the magnetic field intensity of the series field winding at a predetermined value, wherein the auxiliary power source is a battery whereby the auxiliary excitation current supplied to the series field winding is of a controlled magnitude, characterised by a current-limiting element connected in parallel with said blocking diode for recharging the battery when the voltage drop across the battery drops below the voltage drop across the series field winding.

Control of the sub-exciter is accomplished by an excitation control circuit which generates feedback signals in response to a status signal derived from at least one detection element, which monitors, for example, any one or more of the output voltage and current of the main and auxiliary power supplies, the speed of the motor, the load current, the electromagnetic force of the armature, and the voltage across the winding.

The difference between the present invention and conventional control circuits is that the former can increase the efficiency of the system while preserving the features of a low starting current, good torque and good overloading torsion of the DC machine, during both low voltage and full load modes of operation.

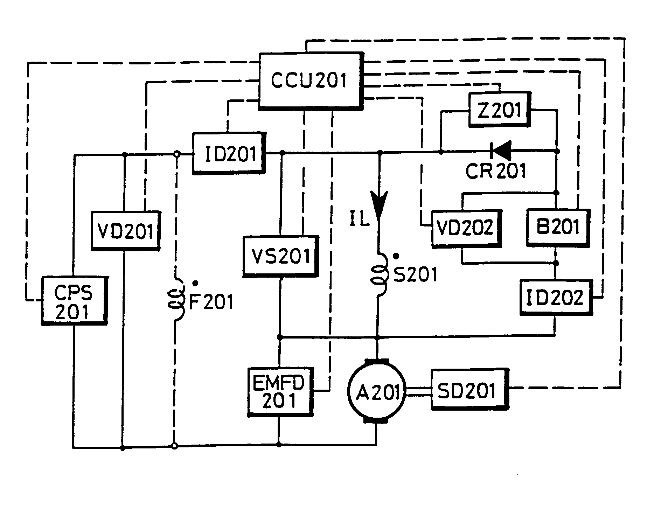

The invention will now be described in greater detail, by way of example, with reference to the drawing, the single figure of which is a control circuit for a DC series or compound motor.

A conventional series or compound motor often has good current-to-torque characteristics during start-up or overload operation, but has an inconsistency in its magnetic field intensity, particularly during low voltage/low speed modes of operation.

In order to achieve a substantially constant magnetic field intensity, the present invention adopts an innovative approach by using an auxiliary power source in the form of a sub-exciter circuit to supplement the series-type excitation supplied to the field winding(s) to increase the magnetic field intensity during either a low voltage or light load mode of operation. Thus, the field winding(s) will be saturated or nearly saturated, with excitation under a full range of voltage conditions, thereby improving the efficiency.

Referring to the drawing, a series motor has a series field winding S201 and an armature A201. It may further comprise a shunt field winding F201, in which case the motor is a compound motor.

A main power supply CPS201, which may be a DC power supply, a DC generator, a solar energy source or an AC source connected to a rectifier, is provided for supplying power to the motor.

An auxiliary power supply (a storage battery B201) is connected in series with a blocking diode CR201, and in parallel with the series field winding S201, for adding auxiliary excitation current to that in the series field winding. The direction of the voltage of the sub-exciter is of the same polarity as the voltage drop across the series field winding S201, in either a generator or a motor.

The auxiliary power supply B201 also includes a current-limiting, adjusting element Z201, which may be an electromechanical or solid-state voltage regulation circuit, or a blocking resistor for charging the storage battery B201 in the reverse direction when the value of the voltage drop across the series field winding S201 exceeds that of the voltage of the auxiliary storage battery B201.

An excitation control circuit CCU201 is provided to generate a signal to control the interface between the main power supply CPS201 and the battery B201 based on signals generated by detection means which sample the status of operation of the motor. The feedback signal, which alternatively may be generated by manual control, controls the blocking diode CR201 to control, in turn, the ratio of the excitation current supplied by the main power supply CPS201 and the excitation current supplied by the battery B201, both of which are added together to form the total excitation current to the series winding S201.

The detection means includes a main power supply detection element VD201 for monitoring the voltage across CPS201, a load current detection element ID201 for monitoring the primary excitation current emanating from the main power supply, an element EMFD201 for monitoring the electromotive force of the armature, an element VS201 for monitoring the voltage drop across the series field winding S201, an element ID202 for monitoring the auxiliary excitation current emanating from the battery B201, an element VS202 for monitoring the voltage drop across the battery B201, and an element SD201 for monitoring the speed of the motor.

The current-limiting, adjusting element Z201 controls the voltage, via the excitation control circuit CCU201, when the voltage drop across the series field winding S201 is bigger than the voltage drop across the battery B201, allowing the battery to be charged in the reverse direction.

The manner of operation of the control system is that the voltage drop at the two ends of the series field winding S201 increases as the load current (IL), i.e. as the primary excitation source increases, that the voltage drop is reverse to that of the sub-exciter storage battery B201, and that the bigger the load current, the smaller the current of the sub-exciter, and the smaller the load current, the bigger the current of the sub-exciter.

The functions of the circuit shown in the drawing are:-

For a motor having a series field winding, sub-exciter control of the series field winding is performed to increase the excitation current into the winding when the magnetic field intensity in the winding is reduced as a result of a drop in the primary excitation current. Otherwise, sub-exciter control of the series field winding is not performed, because the excitation current provided by the main power supply is adequate to create the desired magnetic field intensity in the series winding.

The overall effect of the sub-exciter control is to obtain a magnetic field with constant or appropriate intensity, and thereby to raise the total efficiency of the motor, especially during a low voltage/low load mode of operation.

An advantage of the present invention over conventional systems is that the former is normally able to provide separate control of the excitation supplied to the motor. This separate control enables the motor to achieve a low starting current, a larger torque and a good overloading torsion, and alternatively to offset any reduction in efficiency due to insufficient excitation of the magnetic field winding. Once again, the design is applicable to both DC motors and DC generators

## Claims

1. A control circuit for controlling the series field winding (S201) of a DC machine, the control circuit comprising a main power source (CPS201) for supplying the series field winding with a primary excitation current, an auxiliary power source (B201) in series with a blocking diode (CR201) connected in parallel with the series field winding, for supplying the series field winding with an auxiliary excitation current, and control means (CCU201) for controlling the supply of auxiliary excitation current to the series field winding to maintain the magnetic field intensity of the series field winding at a predetermined value, wherein the auxiliary power source is a battery whereby the auxiliary excitation current supplied to the serie field winding is of a controlled magnitude, characterised by a current-limiting element (Z201) connected in parallel with said blocking diode for recharging the battery (B201) when the voltage drop across the battery drops below the voltage drop across the series field winding (S201).

2. A control circuit as claimed in claim 1, further comprising at least one detection element (VD201, ID201, VS202, ID202,SD201, VS201 or EMFD201) for monitoring at least one operational condition of the machine, the detection element providing the control means (CCU201) with a signal from which the magnetic field intensity of the series field winding (S201) is derived, the control means issuing a feedback signal based on the derived magnetic field intensity for allowing the auxiliary excitation current to enter the series field winding.

3. A control circuit as claimed in claim 2, wherein said operational condition is a voltage drop measured across the series field winding (S201).

4. A control circuit as claimed in claim 2, wherein said operational condition is the rotational speed of the armature of the DC machine.

5. A control circuit as claimed in claim 2, wherein said operational condition is the electromotive force of the armature of the DC machine.

6. A control circuit as claimed in any one of claims 1 to 5, wherein the DC machine is a DC motor.

7. A control circuit as claimed in any one of claims 1 to 5, wherein the DC machine is a DC generator.

## Patentansprüche

1. Schaltung zum Regeln der Reihenschluß-Feldwicklung (S201) einer GS-Maschine mit einer Haupt-Stromquelle (CPS201) zum Speisen der Reihenschluß-Feldwicklung mit einem primären Erregerstrom, einer Hilfs-Stromquelle (B201), die in Reihe mit einer Sperrdiode (CR201) parallel zur Reihenschluß-Feldwicklung gelegt ist, um letztere mit einem Hilfs-Erregerstrom zu speisen, und einer Regeleinrichtung (CCU201), mit der der Hilfs-Erregerstrom zur Reihenschluß-Feldwicklung regelbar ist, um die magnetische Feldstärke der Reihenschluß-Feldwicklung auf einem vorbestimmten Wert zu halten, wobei es sich bei der Hilfs-Stromquelle um eine Batterie handelt und der der Reihenschluß-Feldwicklung zugeführte Hilfs-Erregerstrom in der Stärke geregelt wird, **gekennzeichnet** durch ein strombegrenzendes Element (Z201), das parallel zur Sperrdiode geschaltet ist und über das die Batterie (B201) nachgeladen wird, wenn der Spannungsabfall über der Batterie unter den über der Reihenschluß-Feldwicklung (S201) abfällt.

2. Regelschaltung nach Anspruch 1 weiterhin mit mindestens einem Detektorelement (VD201, ID201, VS202, ID202, SD201, VS201 oder EMFD201) zum Überwachen mindestens einer Betriebsgröße der Maschine, wobei das Detektorelement an die Regeleinrichtung (CCU201) ein Signal liefert, aus dem die magnetische Feldstärke der Reihenschluß-Feldwicklung (S201) abgeleitet wird, und wobei die Regeleinrichtung aufgrund der abgeleiteten magnetischen Feldstärke ein Rückführsignal zum Steuern des Einspeisen des Hilfs-Erregerstroms in die Reihenschluß-Feldwicklung abgibt.

3. Regelschaltung nach Anspruch 2, bei der die Betriebsgröße ein über der Reihenschluß-Feldwicklung (S201) gemessener Spannungsabfall ist.

4. Regelschaltung nach Anspruch 2, bei der die Betriebsgröße die Drehzahl des Ankers der GS-Maschine ist.

5. Regelschaltung nach Anspruch 2, bei der die Betriebsgröße die EMK der Armatur der GS-Maschine ist.

6. Regelschaltung nach einem der Ansprüche 1 bis 5, bei der die GS-Maschine ein GS-Motor ist.

7. Regelschaltung nach einem der Ansprüche 1 bis 5, bei der die GS-Maschine ein GS-Generator ist.

## Revendications

1. Circuit de commande destiné à commander l'enroulement champ série (S201) d'une machine à courant continu, le circuit de commande comprenant une source d'alimentation électrique secteur (CPS201) pour alimenter l'enroulement champ série avec un courant d'excitation primaire, une source d'alimentation puissance auxiliaire (B201) en série avec une diode de blocage (CR201) connectée en parallèle avec l'enroulement de champ série pour alimenter l'enroulement champ série en un courant d'excitation auxiliaire, et des moyens de commande (CCU201) pour commander l'alimentation du courant d'excitation auxiliaire à l'enroulement de champ série pour maintenir l'intensité du champ magnétique de l'enroulement champ série à une valeur prédéterminée, circuit dans lequel la source de puissance auxiliaire est une batterie de sorte que le courant d'excitation auxiliaire fourni à l'enroulement de champ série est de grandeur contrôlée, caractérisé par un élément limitateur de courant (Z201) connecté en parallèle avec la diode de blocage en série pour recharger la batterie (B201) lorsque la chute de tension au niveau de la batterie descend au-dessous de la chute de tension au niveau de l'enroulement de champ série (S201).

2. Circuit de commande selon la revendication 1, comprenant de plus au moins un élément de détection (VD201, ID201, VS202, ID202, SD201, VS201 ou EMFD201) pour commander au moins une condition opérationnelle de la machine, l'élément de détection fournissant au moyen de commande (CCU201) un signal à partir duquel est dérivé l'intensité de champ magnétique de l'enroulement champ série (S201), les moyens de commande émettant un signal de rétroaction basé sur l'intensité de champ magnétique dérivé pour permettre au courant d'excitation auxiliaire de pénétrer dans l'enroulement de champ série.

3. Circuit de commande selon la revendication 2, dans lequel la condition opérationnelle est une chute de tension mesurée au niveau de l'enroulement de champ série (S201).

4. Circuit de commande selon la revendication 2, dans lequel la condition opérationnelle est la vitesse rotationnelle de l'induit de la machine à courant continu.

5. Circuit de commande selon la revendication 2, dans lequel la condition opérationnelle est la force électromotrice de l'induit de la machine à courant continu.

6. Circuit de commande selon l'une quelconque des revendications 1 à 5, dans lequel la machine à courant continu est un moteur à courant continu.

7. Circuit de commande selon l'une quelconque des revendications 1 à 5, dans lequel la machine à courant continu est un générateur de courant continu.
